# EUROPEAN PATENT APPLICATION

(11) **EP 4 733 439 A1**
(43) Date of publication of application: **29.04.2026**
(21) Application number: 25189491.1
(22) Date of filing: 15.07.2025
(51) Int. Cl.: C25B 1/04, C25B 15/02, C25B 9/73

(54) **HYDROGEN PRODUCTION APPARATUS DEGRADATION DETECTION SYSTEM**

(30) Priority: 24.10.2024 JP 2024187613
(71) Applicant: Toshiba Energy Systems & Solutions Corporation, Saiwai-ku Kawasaki-shi Kanagawa (JP)
(72) Inventor: Tsuchiya, Naomi, Kawasaki-shi, Kanagawa (JP); Yamada, Kazuya, Tokyo (JP); Shibasaki, Osamu, Kawasaki-shi, Kanagawa (JP); Osada, Norikazu, Kawasaki-shi, Kanagawa (JP)
(74) Representative: Hoffmann Eitle

(57) **Abstract**

A power supply unit supplies a current of a second current value different from a first current value to an electrolysis unit at a first time point from a state of supplying a current of the first current value to the electrolysis unit, and then returns to the state of supplying the current of the first current value at a second time point. A degradation detection unit finds a difference value between a first measured voltage of the electrolysis unit acquired when the current of the first current value is supplied before the first time point and a second measured voltage of the electrolysis unit acquired when the current of the first current value is switched to the current of the second current value at the first time point, and detects the degradation of the electrolysis unit according to the electrolysis unit voltage difference value.

## Description

### FIELD

Embodiments of the present invention relate to a hydrogen production apparatus degradation detection system.

### BACKGROUND

In recent years, a hydrogen production apparatus has been attracting attention to realize a hydrogen energy society. For example, the hydrogen production apparatus is configured to produce hydrogen gas by electrolyzing high-temperature steam in an electrolysis unit. The electrolysis unit includes, for example, electrolysis cell-stacks in which a plurality of electrolysis cells are stacked in order to meet the demand for increasing the hydrogen production amount.

In order to improve the performance of the above hydrogen production apparatus, various techniques are proposed. For example, it is proposed to produce hydrogen using fluctuating electric power such as electric power generated by renewable energy and perform pulse width control of the electric power to be supplied to the electrolysis cell-stacks according to the flow rate of the steam. Besides, it is also proposed to select the number of electrolysis cell-stacks to be driven, according to the fluctuating electric power.

The hydrogen production apparatus may cause degradation when it is operated for a long time. For example, there are some cases where catalytic components (nickel or the like) constituting a hydrogen electrode in the electrolysis cells are lost, and cases where chromium poisoning occurs in the electrolysis cell. In addition, there is a case where degradation (for example, increased contact resistance due to loosening of fastening parts) occurs in a current supply line which supplies current from the power supply unit to the electrolysis unit. As a result, it may become difficult to perform hydrogen production safely and efficiently.

Because of the above circumstances, it is demanded to easily detect the degradation of the hydrogen production apparatus. Especially, it is necessary to detect the degradation when the operation is being continuously executed in the hydrogen production apparatus.

Therefore, the problem to be solved by the present invention is to provide hydrogen production apparatus degradation detection system that can easily detect degradation of the hydrogen production apparatus.

### BRIEF DESCRIPTION OF THE DRAWINGS

FIG. 1 is a schematic diagram of a hydrogen production apparatus 1 according to embodiments of the invention disclosed herein.
FIG. 2 is a schematic diagram illustrating a configuration of the hydrogen production apparatus degradation detection system 100 according to the first embodiments.
FIG. 3A is a chart illustrating the measured current DI, measured voltage of the electrolysis-unit DV, and measured temperature of the electrolysis-unit DT which are input into a degradation detection unit 120 in the first embodiment of the hydrogen production apparatus degradation detection system 100.
FIG. 3B is a chart illustrating the voltage difference of the electrolysis-unit ΔV and the rate of temperature change per unit time of electrolysis-unit HT (= ΔT/t) obtained by the degradation detection unit 120 in the first embodiment of the hydrogen production apparatus degradation detection system 100.
FIG. 4 is a chart illustrating the measured current DI, the measured electrolysis unit voltage DV, and the measured electrolysis unit temperature DT input into the degradation detection unit 120 in a comparative example.
FIG. 5 is a chart illustrating the measured current DI, measured voltage of the electrolysis unit DV, and measured temperature of the electrolysis unit DT which are input into the degradation detection unit 120 in Modification example 1-1.
FIG. 6 is a chart for explaining Modification example 1-2.
FIG. 7 is a schematic diagram of the hydrogen production apparatus degradation detection system 100 according to a second embodiment.
FIG. 8A is a chart illustrating the measured current DI, the measured voltage of the electrolysis unit DV, and the measurement voltage of the power supply unit VM which are input into the degradation detection unit 120 in the hydrogen production apparatus degradation detection system 100 according to the second embodiment.
FIG. 8B is a chart illustrating the difference of voltage of the power supply unit ΔVM found by the degradation detection unit 120 in the hydrogen production apparatus degradation detection system 100 according to the second embodiment.

### DETAILED DESCRIPTION

A hydrogen production apparatus degradation detection system in an embodiment includes a degradation detection unit and detects degradation of a hydrogen production apparatus configured to execute electrolysis of water by supplying a current from a power supply unit to an electrolysis unit via a current supply line. The degradation detection unit is configured to execute detection of degradation of the electrolysis unit based on an measured voltage of the electrolysis unit acquired by measuring a voltage of the electrolysis unit when the current is supplied from the power supply unit to the electrolysis unit. Here, the power supply unit executes electric power supply to supply a current of a second current value different from a first current value to the electrolysis unit at a first time point from a state of supplying the current of the first current value to the electrolysis unit, and then return to the state of supplying the current of the first current value to the electrolysis unit at a second time point. The degradation detection unit finds a difference value between a first measured voltage of the electrolysis unit acquired as the measured voltage of the electrolysis unit when the current of the first current value is supplied to the electrolysis unit before the first time point and a second measured voltage of the electrolysis unit acquired as the measured voltage of the electrolysis unit when the current of the first current value is switched to the current of the second current value at the first time point, as an electrolysis unit voltage difference value, and detects the degradation of the electrolysis unit according to the electrolysis unit voltage difference value.

### <First embodiment>

### [A] Configuration of a hydrogen production apparatus 1

Before explaining a hydrogen production apparatus degradation detection system in a first embodiment, an example of a hydrogen production apparatus 1 which is a target for detecting degradation by the hydrogen production apparatus degradation detection system will be explained.

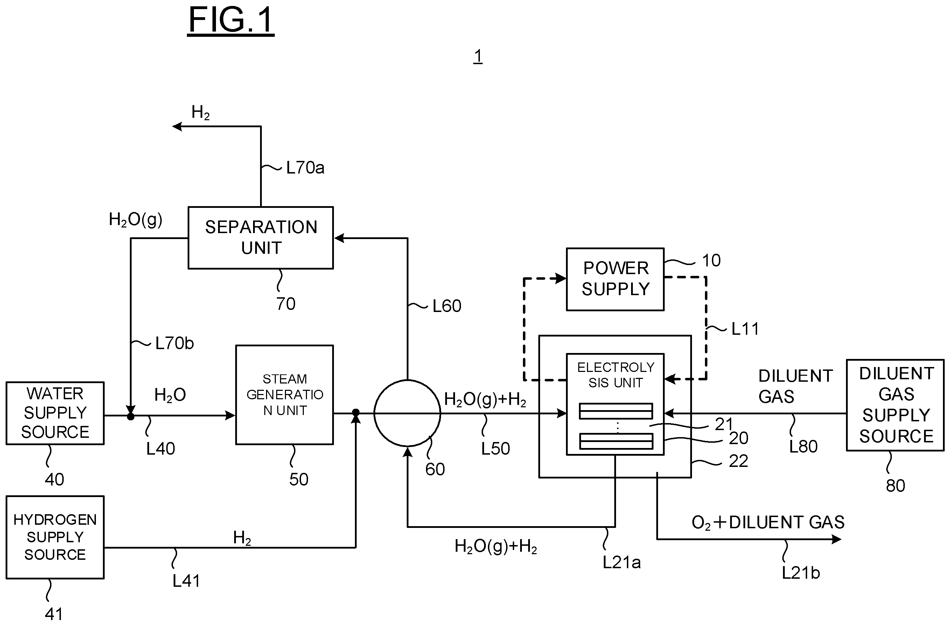

FIG. 1 is a schematic diagram illustrating a configuration of the hydrogen production apparatus 1 according to a first embodiment.

As illustrated in FIG. 1, the hydrogen production apparatus 1 has a power supply unit 10 and an electrolysis unit 20 and is configured such that a current is supplied from the power supply unit 10 to the electrolysis unit 20 via a current supply line L 11 to thereby execute production of hydrogen. Components constituting the hydrogen production apparatus 1 will be explained in order.

### [A-1] Power supply unit 10

The power supply unit 10 is provided for supplying electric power to the electrolysis unit 20. The power supply unit 10 includes, for example, a power generation facility and is configured such that electric power generated by the power generation facility is supplied to the electrolysis unit 20. In the power supply unit 10, the power generation facility is configured to generate electric power using, for example, renewable energy (sunlight, wind power, or the like). In addition to this, the power generation facility may be configured to generate electric power using not the renewable energy but a fossil fuel. Further, the power supply unit 10 may include a storage battery which stores electric power output from the power generation facility, and may be configured to supply the electric power from the storage battery to the electrolysis unit 20.

### [A-2] Electrolysis unit 20

The electrolysis unit 20 is electrically connected to the power supply unit 10 via the current supply line L11 and is supplied with electric power from the power supply unit 10. The electrolysis unit 20 is configured such that the electric power supplied from the power supply unit 10 causes a current to flow to execute electrolysis of water, thereby producing hydrogen.

Here, the electrolysis unit 20 includes an electrolysis cell-stacks in which a plurality of electrolysis cells 21 are stacked and electrically connected in series. The electrolysis cell 21 is, for example, a solid oxide electrolysis cell and is configured such that an electrolyte membrane (not illustrated) of a solid oxide intervenes between a hydrogen electrode (not illustrated) and an oxygen electrode (not illustrated).

Here, the electrolysis unit 20 is accommodated in an electrolysis cell-stacks container 22. The electrolysis cell-stacks container 22 is configured such that its inside is kept at a temperature of about 500 to 800°C, for example, by heating by an electric heater (not illustrated).

In the electrolysis unit 20, steam as a raw material for hydrogen production is supplied to the hydrogen electrode of the electrolysis cell 21. The steam, in a state of being mixed with hydrogen, is supplied to the hydrogen electrode. Further, in the electrolysis unit 20, a diluent gas is supplied to the oxygen electrode of the electrolysis cell 21. Then, the electrolysis unit 20 is supplied with the electric power from the power supply unit 10. This executes electrolysis in the electrolysis cell 21, so that hydrogen is produced at the hydrogen electrode and oxygen is produced at the oxygen electrode.

Specifically, water supplied from a water supply source 40 to a steam generation unit 50 via a pipe L40 is heated by the steam generation unit 50 to generate the steam. Then, the steam generated in the steam generation unit 50 is mixed with hydrogen from a hydrogen supply source 41 via a pipe L41, and then flows into the hydrogen electrode of the electrolysis cell 21 constituting the electrolysis unit 20 via a pipe L50 (raw material supply line) provided with a heat exchanger 60. Then, the hydrogen produced at the hydrogen electrode by the electrolysis of the steam flows, as a mixed medium in which the hydrogen is mixed with the steam that has not been electrolyzed, to the heat exchanger 60 via a pipe L21a (product discharge line). In the heat exchanger 60, the mixed medium flowing from the pipe L21a performs heat exchange with the steam flowing through the pipe L50, and then flows into a separator 70 via a pipe L60. In the separator 70, the mixed medium is separated into hydrogen and steam. The hydrogen separated in the separator 70 is discharged to the outside of the separator 70 via a pipe L70a and, for example, stored. In contrast to this, the steam separated in the separator 70 flows into the pipe L40 and is mixed into water flowing through the pipe L40 from the water supply source 40.

Note that in this embodiment, the steam flowing, as the raw material, into the hydrogen electrode of the electrolysis unit 20 contains a hydrogen gas in order to prevent hydrogen gas is preferably 0.5 mol% or more in the raw material. Especially, the molar concentration of the hydrogen gas is preferably 5 mol% or more and 50 mol% or less, and more preferably 10 mol% or more and 30 mol% or less.

The diluent gas to be supplied to the oxygen electrode of the electrolysis cell 21 is gas containing oxygen and is, for example, air. The diluent gas is supplied from a diluent gas source 80, for example, to the oxygen electrode of the electrolysis cell 21 via a pipe L80 (diluent gas supply line). The diluent gas is supplied in order to dilute the oxygen produced at the oxygen electrode by the electrolysis. A mixed gas of the diluent gas and the oxygen produced at the oxygen electrode is discharged to the outside of the electrolysis cell 21 via a pipe L21b (produced oxygen discharge line).

### [B] Configuration of the hydrogen production apparatus degradation detection system

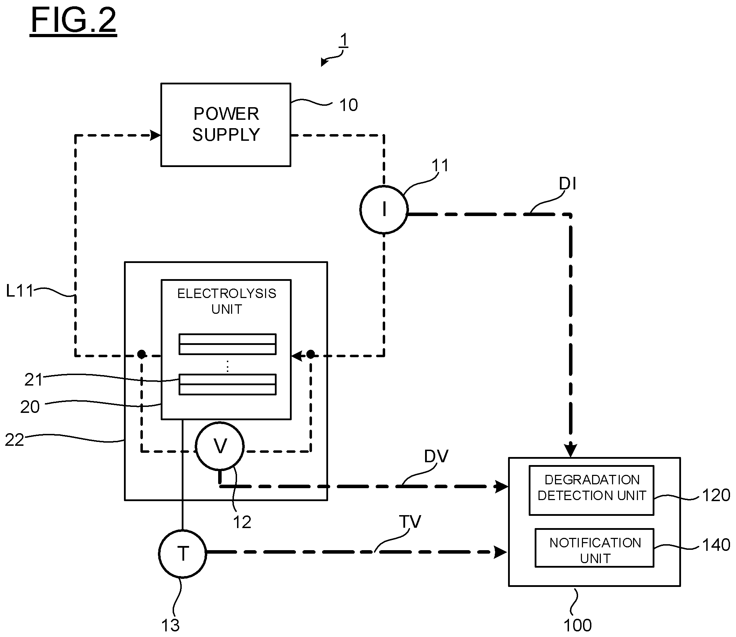

FIG. 2 is a schematic diagram illustrating a configuration of a hydrogen production apparatus degradation detection system 100 according to the first embodiment. FIG. 2 shows the relation between the hydrogen production apparatus degradation detection system 100 and a part of the hydrogen production apparatus 1 (see FIG. 1).

The hydrogen production apparatus degradation detection system 100 in this embodiment has, as illustrated in FIG. 2, a degradation detection unit 120 and a notification unit 140, and detects degradation of the hydrogen production apparatus 1. Though not illustrated, the hydrogen production apparatus degradation detection system 100 includes, for example, an arithmetic unit (not illustrated) and a memory device (not illustrated) and is configured such that the arithmetic unit performs arithmetic processing using a program stored in the memory device to function as the units. The units constituting the hydrogen production apparatus degradation detection system 100 will be explained in order.

### [B-1] Degradation detection unit 120

Into the degradation detection unit 120, a measured current DI, an measured voltage of electrolysis unit DV, and an measured temperature ofelectrolysis unit DT are input as input data.

The measured current DI is measured data acquired by measuring the current supplied from the power supply unit 10 to the electrolysis unit 20 in the hydrogen production apparatus 1 by an ammeter 11.

The measured voltage of electrolysis unit voltage DV is measured data acquired by measuring the voltage of the electrolysis unit 20 by a voltmeter 12 when the current is supplied from the power supply unit 10 to the electrolysis unit 20 in the hydrogen production apparatus 1.

The measured temperature of electrolysis unit temperature DT is measured data acquired by measuring the temperature of the electrolysis unit 20 by a thermometer 13 when the current is supplied from the power supply unit 10 to the electrolysis unit 20 in the hydrogen production apparatus 1.

Though details will be explained later, the degradation detection unit 120 executes the detection of the degradation of the electrolysis unit 20 based on the measured current DI, the measured voltage of electrolysis unit DV, and the measured temperature of electrolysis unit DT.

### [B-2] Notification unit 140

The notification unit 140 is configured to notify to replace the electrolysis unit 20 based on a result of the degradation detected by the degradation detection unit 120. For example, the notification unit 140, when determining that the degradation of the electrolysis unit 20 progresses and thus the replacement of the electrolysis unit 20 is necessary, notifies a user of information regarding the replacement of the electrolysis unit 20. The information regarding the replacement of the electrolysis unit 20 is displayed, for example, on a display.

### [C] Operation of the hydrogen production apparatus degradation detection system

An operation when detecting the degradation of the hydrogen production apparatus 1 in the hydrogen production apparatus degradation detection system 100 in this embodiment will be explained.

### [C-1] Input of the measured current DI, the voltage of electrolysis unit DV, and the measured temperature of electrolysis unit DT

When detecting the degradation of the hydrogen production apparatus 1, first, the measured current DI, the measured voltage of electrolysis unit DV, and the temperature of electrolysis unit DT are input, as the input data, into the degradation detection unit 120.

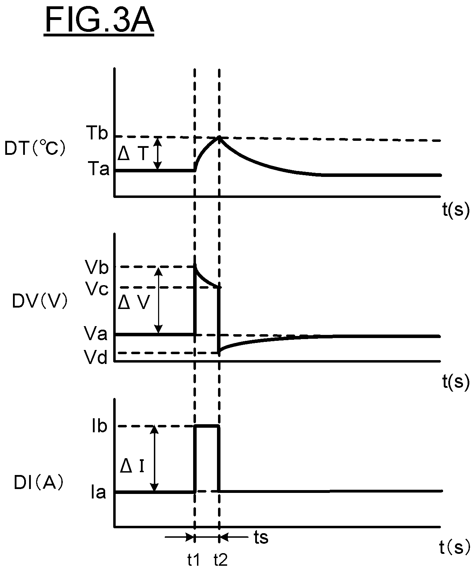

FIG. 3A is a chart illustrating the measured current DI, the measured voltage of the electrolysis unit DV, and the measured temperature of the electrolysis unit DT which are input into the degradation detection unit 120 in the hydrogen production apparatus degradation detection system 100 according to the first embodiment. In FIG. 3A, the horizontal axis indicates time t (s), and the vertical axes in graphs indicate the measured current DI (A), the measured voltage of the electrolysis unit DV (V), and the measured temperature of the electrolysis unit DT (°C), respectively.

When detecting the degradation of the hydrogen production apparatus 1 in this embodiment, the power supply unit 10 executes power supply to the electrolysis unit 20 through step input as illustrated in FIG. 3A.

Specifically, the power supply unit 10 first supplies current of a second current value Ib different from a first current value Ia to the electrolysis unit 20 at a first time point t1 from a state of supplying the current of the first current value Ia to the electrolysis unit 20. Here, the second current value Ib indicates a case of being higher than the first current value Ia. The difference between the first current value Ia and the second current value Ib is preferably about 0.1 A/cm² in terms of current density. Thereafter, the power supply unit 10 returns to the state of supplying the current of the first current value Ia to the electrolysis unit 20 at a second time point t2 at which a predetermined time ts has elapsed from the first time point t1. In other words, the measured current DI (A) rises from the first current value Ia to the second current value Ib at the first time point t1 and thereafter lowers from the second current value Ib to the first current value Ia at the second time point t2 (Ia < Ib).

The measured voltage of the electrolysis unit DV is a first measured voltage of electrolysis unit Va when the current of the first current value Ia is supplied to the electrolysis unit 20 before the first time point t1. Then, when the current of the first current value Ia is switched to the current of the second measured current Ib at the first time point t1, the measured voltage of the electrolysis unit DV increases from the measured voltage of a first electrolysis unit Va to a second measured voltage electrolysis unit Vb (maximum value). Then, during an interval (ts) between the first time point t1 and the second time point t2, the measured voltage of the electrolysis unit DV decreases from the measured voltage of second electrolysis unit Vb to a third measured voltage of electrolysis unit Vc as the time t passes. Then, when the current of the second current value Ib is switched to the first current value Ia at the second time point t2, the measured voltage of the electrolysis unit DV decreases from the third measured voltage of the electrolysis unit Vc to a fourth measured voltage of electrolysis unit Vd (minimum value). Then, after the second time point t2, the measured voltage of the electrolysis unit DV increases from the fourth measured voltage of the electrolysis unit Vd to the first measured voltage of the electrolysis unit Va as the time t passes (Vb > Vc > Va > Vd).

The measured temperature of the electrolysis unit DT (°C) is a first measured temperature of the electrolysis unit Ta when the current of the first current value Ia is supplied to the electrolysis unit 20 before the first time point t1. Then, during the interval (ts) from when the current of the first measured current Ia is switched to the current of the second measured current Ib at the first time point t1 until the second time point t2, the measured temperature of the electrolysis unit DT (°C) increases from the first measured temperature of the electrolysis unit Ta to a second measured temperature of the electrolysis unit Tb as the time t passes. Then, after the second time point t2, the measured temperature of the electrolysis unit DT (°C) decreases from the second measured temperature of the electrolysis unit Tb to the first measured temperature of the electrolysis unit Ta as the time t passes (Tb > Ta).

### [C-2] Degradation detection of the hydrogen production apparatus 1

Next, the degradation detection unit 120 detects the degradation of the hydrogen production apparatus 1 based on the measured current DI, the measured voltage of the electrolysis unit DV, and the measured temperature of the electrolysis unit DT.

Here, the degradation detection unit 120 acquires the first measured voltage of the electrolysis unit Va and the second measured voltage of the electrolysis unit Vb of the measured voltage of the electrolysis units DV input from the voltmeter 12. The first measured voltage of the electrolysis unit Va and the second measured voltage of the electrolysis unit Vb are selected based on the input of the first current value Ia and the second current value Ib. Then, the degradation detection unit 120 finds a difference value between the first measured voltage of the electrolysis unit Va and the second measured voltage of the electrolysis unit Vb, as an electrolysis unit voltage difference value ΔV.

Together with this, the degradation detection unit 120 acquires the first measured temperature of the electrolysis unit Ta and the second measured temperature of the electrolysis unit Tb of the measured temperature of the electrolysis units DT (°C) input from the thermometer 13. The first measured temperature of the electrolysis unit Ta and the second measured temperature of the electrolysis unit Tb are selected based on input of the first current value Ia and the second current value Ib. Then, the degradation detection unit 120 finds a difference value between the first measured temperature of the electrolysis unit Ta and the second measured temperature of the electrolysis unit Tb, as an electrolysis unit temperature difference value ΔT. Further, the degradation detection unit 120 finds a value obtained by dividing the electrolysis unit temperature difference value ΔT by the time ts between the first time point t1 and the second time point t2, as an electrolysis unit temperature change rate HT (= ΔT/t).

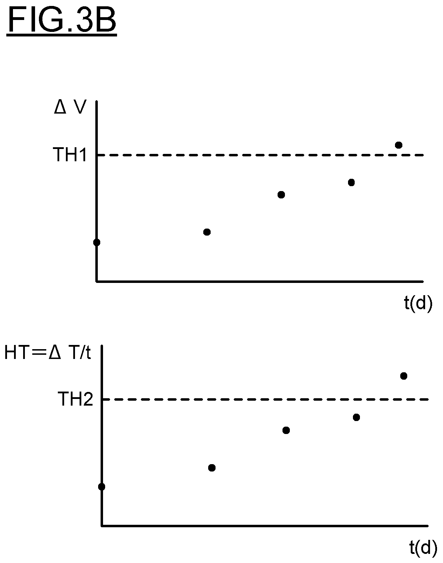

FIG. 3B is a chart illustrating the electrolysis unit voltage difference value ΔV and the electrolysis unit temperature change rate HT (= ΔT/t) which are found by the degradation detection unit 120 in the hydrogen production apparatus degradation detection system 100 according to the first embodiment. In FIG. 3B, the horizontal axis indicates time t (d), and the vertical axes in graphs indicate the electrolysis unit voltage difference value ΔV and the electrolysis unit temperature change rate HT (= ΔT/t), respectively.

The electrolysis unit voltage difference value ΔV is a value increasing as the time t (d) passes as illustrated in FIG, 3B, and increases as the degradation of the electrolysis unit 20 progresses. Specifically, the electrolysis unit voltage difference value ΔV increases with the degradation resulting from an increase in cell resistance due to a change in fine structure of the cell constituting the electrolysis unit and accumulation of impurities on the cell in the electrolysis unit 20.

As illustrated in FIG. 3B, the electrolysis unit temperature change rate HT (= ΔT/t) is a value increasing as the time t (d) passes as with the electrolysis unit voltage difference value ΔV, and increases as the degradation of the electrolysis unit 20 progresses. Specifically, the electrolysis unit temperature change rate HT (= ΔT/t) increases with the degradation because the heating value from the cell increases due to an increase in Joule heat from the cell at the application of the current with an increase in cell resistance at the electrolysis in the electrolysis unit 20.

As explained above, in this embodiment, the degradation detection unit 120 finds the electrolysis unit voltage difference value ΔV and the electrolysis unit temperature change rate HT (= ΔT/t) as values which quantitatively indicate the degradation state of the electrolysis unit 20.

### [C-3] Notification

Next, based on the result of the degradation detected by the degradation detection unit 120, the notification unit 140 notifies to replace the electrolysis unit 20.

Here, information on the electrolysis unit voltage difference value ΔV and the electrolysis unit temperature change rate HT (= ΔT/t) is input, as a detection result of the degradation, from the degradation detection unit 120 into the notification unit 140. As illustrated in FIG. 3B, the notification unit 140 determines whether the electrolysis unit voltage difference value ΔV exceeds a threshold value TH1. Further, the notification unit 140 determines whether the electrolysis unit temperature change rate HT (= ΔT/t) exceeds a threshold value TH2 as illustrated in FIG. 3B. The threshold value TH1 and the threshold value TH2 are recommendation values for the replacement of the electrolysis unit 20 and decided, for example, based on a result of a test carried out in advance.

The notification unit 140 notifies the user that the replacement of the electrolysis unit 20 is necessary, when at least one of the electrolysis unit voltage difference value ΔV and the electrolysis unit temperature change rate HT (= ΔT/t) exceeds the threshold value TH1, TH2.

### [D] Conclusion

As explained above, in the hydrogen production apparatus degradation detection system 100 in this embodiment, the degradation detection unit 120 executes the detection of the degradation of the electrolysis unit 20 based on the measured voltage of the electrolysis unit DV acquired by measuring the voltage of the electrolysis unit 20 and the measured temperature of the electrolysis unit DT acquired by measuring the temperature of the electrolysis unit 20, at the time when the current is supplied from the power supply unit 10 to the electrolysis unit 20.

Here, the power supply unit 10 supplies the current of the second current value Ib different from the first current value Ia to the electrolysis unit 20 at the first time point t1 from the state of supplying the current of the first current value Ia to the electrolysis unit 20. Thereafter, the power supply unit 10 returns to the state of supplying the current of the first current value Ia to the electrolysis unit 20 at the second time point t2.

In this event, the degradation detection unit 120 finds a difference value between the first measured voltage of the electrolysis unit Va acquired when the current of the first current value Ia is supplied to the electrolysis unit 20 before the first time point t1 and the second measured voltage of the electrolysis unit Vb which fluctuates directly after the current of the first current value Ia is switched to the current of the second current value Ib and is measured at the first time point t1, as the electrolysis unit voltage difference value ΔV.

Together with the above, the degradation detection unit 120 finds a difference value between the first measured temperature of the electrolysis unit Ta acquired when the current of the first current value Ia is supplied to the electrolysis unit 20 before the first time point t1 and the second measured temperature of the electrolysis unit Tb measured when the current of the second current value Ib is switched to the current of the first current value Ia at the second time point t2, as the electrolysis unit temperature difference value ΔT. Further, the degradation detection unit 120 finds a value obtained by dividing the electrolysis unit temperature difference value ΔT by the time ts between the first time point t1 and the second time point t2, as the electrolysis unit temperature change rate HT (= ΔT/t).

Then, the degradation detection unit 120 detects the degradation of the electrolysis unit 20 according to the electrolysis unit voltage difference value ΔV and the electrolysis unit temperature change rate HT (= ΔT/t). The electrolysis unit voltage difference value ΔV and the electrolysis unit temperature change rate HT (= ΔT/t) fluctuate as the resistance or the like increases due to the degradation of the electrolysis unit 20.

Therefore, according to the hydrogen production apparatus degradation detection system 100 in this embodiment, the degradation of the hydrogen production apparatus 1 including the electrolysis unit 20 can be easily detected.

In addition to this, in the hydrogen production apparatus degradation detection system 100 in this embodiment, when at least one of the electrolysis unit voltage difference value ΔV and the electrolysis unit temperature change rate HT (= ΔT/t) exceeds the predetermined threshold value, the notification unit 140 notifies to replace the electrolysis unit 20. Therefore, in this embodiment, the user can easily grasp the replacement of the electrolysis unit 20.

### [E] Comparative example

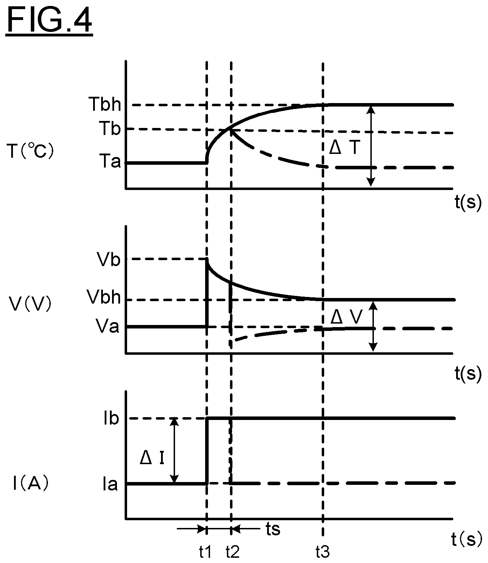

FIG. 4 is a chart illustrating the measured current DI, the measured voltage of the electrolysis unit DV, and the measured temperature of the electrolysis unit DT which are input into the degradation detection unit 120 in a comparative example. In FIG. 4, the horizontal axis indicates the time t (s), and the vertical axes in graphs indicate the measured current DI (A), the measured voltage of the electrolysis unit DV (V), and the measured temperature of the electrolysis unit DT (°C), respectively. In FIG. 4, the case of the comparative example is indicated by a "solid line" and the case of the above embodiment (see FIG. 3A) is indicated by a "one-dotted chain line" for each of the measured current DI (A), the measured voltage of the electrolysis unit DV (V), and the measured temperature of the electrolysis unit DT (°C).

In this comparative example, as illustrated in FIG. 4, the power supply unit 10 first supplies the current of the second current value Ib different from the first current value Ia to the electrolysis unit 20 at the first time point t1 from the state of supplying the current of the first current value Ia to the electrolysis unit 20, as in the case of the above embodiment (see FIG. 3A). However, in this comparative example, the power supply unit 10 holds the current to be supplied to the electrolysis unit 20 which is at the second current value Ib, at the second current value Ib after the first time point t1, unlike the case of the above embodiment (see FIG. 3A).

The measured voltage of the electrolysis unit DV is the first measured voltage of the electrolysis unit Va when the current of the first current value Ia is supplied to the electrolysis unit 20 before the first time point t1, as in the case of the above embodiment (see FIG. 3A). Then, when the current of the first current value Ia is switched to the current of the second current value Ib at the first time point t1, the measured voltage of the electrolysis unit DV increases from the first measured voltage of the electrolysis unit Va to the second measured voltage of the electrolysis unit Vb (maximum value). However, after the first time point t1, the measured voltage of the electrolysis unit DV decreases from the second measured voltage of the electrolysis unit Vb as the time t passes and holds a constant measured voltage of the electrolysis unit Vbh, unlike the case of the above embodiment (see FIG. 3A).

The measured temperature of the electrolysis unit DT (°C) is the first measured temperature of the electrolysis unit Ta when the current of the first current value Ia is supplied to the electrolysis unit 20 before the first time point t1, as in the case of the above embodiment (see FIG. 3A). However, after the current of the first current value Ia is switched to the current of the second current value Ib at the first time point t1, the measured temperature of the electrolysis unit DT (°C) increases from the first measured temperature of the electrolysis unit Ta as the time t passes and holds a constant measured temperature of the electrolysis unit Tbh, unlike the case of the above embodiment (see FIG. 3A).

In the comparative example, the electrolysis unit voltage difference value ΔV being a difference value between the first measured voltage of the electrolysis unit Va and the constant measured voltage of the electrolysis unit Vbh can be found as a value which quantitatively indicates the degradation state of the electrolysis unit 20. Further, in the comparative example, the electrolysis unit temperature difference value ΔT being a difference value between the first measured temperature of the electrolysis unit Ta and the constant measured temperature of the electrolysis unit Tbh can be found as a value which quantitatively indicates the degradation state of the electrolysis unit 20.

However, the time required to reach the constant measured voltage of the electrolysis unit Vbh and the constant measured temperature of the electrolysis unit Tbh is, for example, several tens of minutes. The time during which the constant measured voltage of the electrolysis unit Vbh and the constant measured temperature of the electrolysis unit Tbh can be acquired is longer than the time during which the second measured voltage of the electrolysis unit Vb and the second measured temperature of the electrolysis unit Tb can be acquired.

Therefore, in the case of this comparative example, when the power supply unit 10 supplies the current of the same current value for a long time, it is possible to detect the degradation of the hydrogen production apparatus 1, but when the power supply unit 10 varies the current value in a short time, it is difficult to detect the degradation of the hydrogen production apparatus 1. However, in the case of the above embodiment, also when the power supply unit 10 varies the current value in a short time, it is easy to detect the degradation of the hydrogen production apparatus 1.

### [F] Modification examples

### [F-1] Modification example 1-1

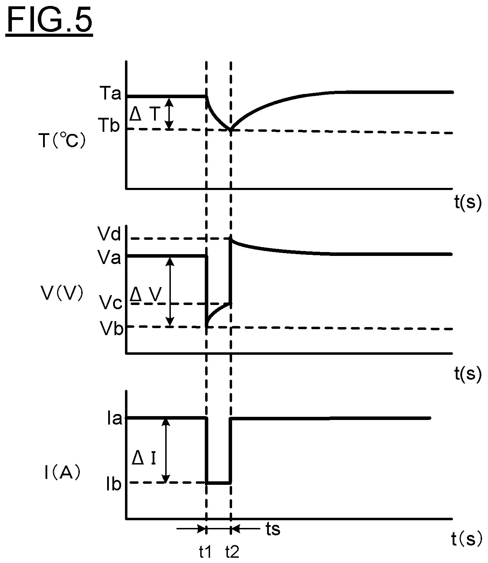

FIG. 5 is a chart illustrating the measured current DI, the measured voltage of the electrolysis unit DV, and the measured temperature of the electrolysis unit DT which are input into the degradation detection unit 120 in Modification example 1-1. In FIG. 5, the horizontal axis indicates the time t (s), and the vertical axes in graphs indicate the measured current DI (A), the measured voltage of the electrolysis unit DV (V), and the measured temperature of the electrolysis unit DT (°C), respectively.

When detecting the degradation of the hydrogen production apparatus 1 in this modification example, as illustrated in FIG. 5, the power supply unit 10 executes the power supply to the electrolysis unit 20 by step input, as in the case of the above embodiment (FIG. 3A). In the case of the above embodiment (FIG. 3A), the case where the first current value Ia is smaller than the second current value Ib is explained, but the first current value Ia may be larger than the second current value Ib as in this modification example.

Specifically, in this modification example, the measured current DI (A) lowers from the first current value Ia to the second current value Ib at the first time point t1, and then rises from the second current value Ib to the first current value Ia at the second time point t2 (Ia > Ib).

The measured voltage of the electrolysis unit DV is the first measured voltage of the electrolysis unit Va when the current of the first current value Ia is supplied to the electrolysis unit 20 before the first time point t1. Then, when the current of the first current value Ia is switched to the current of the second current value Ib at the first time point t1, the measured voltage of the electrolysis unit DV decreases from the first measured voltage of the electrolysis unit Va to the second measured voltage of the electrolysis unit Vb (minimum value). Then, during the interval (ts) between the first time point t1 and the second time point t2, the measured voltage of the electrolysis unit DV increases from the second measured voltage of the electrolysis unit Vb to the third measured voltage of the electrolysis unit Vc as the time t passes. Then, when the current of the second current value Ib is switched to the current of the first current value Ia at the second time point t2, the measured voltage of the electrolysis unit DV increases from the third measured voltage of the electrolysis unit Vc to the fourth measured voltage of the electrolysis unit Vd (maximum value). Then, after the second time point t2, the measured voltage of the electrolysis unit DV decreases from the fourth measured voltage of the electrolysis unit Vd to the first measured voltage of the electrolysis unit Va as the time t passes (Vb < Vc < Va < Vd).

The measured temperature of the electrolysis unit DT (°C) is the first measured temperature of the electrolysis unit Ta when the current of the first current value Ia is supplied to the electrolysis unit 20 before the first time point t1. Then, during the interval (ts) from when the current of the first current value Ia is switched to the current of the second current value Ib at the first time point t1 until the second time point t2, the measured temperature of the electrolysis unit DT (°C) decreases from the first measured temperature of the electrolysis unit Ta to the second measured temperature of the electrolysis unit Tb as the time t passes. Then, after the second time point t2, the measured temperature of the electrolysis unit DT (°C) increases from the second measured temperature of the electrolysis unit Tb to the first measured temperature of the electrolysis unit Ta as the time t passes (Tb < Ta).

Also in this modification example, the degradation detection unit 120 finds the difference value between the first measured voltage of the electrolysis unit Va and the second measured voltage of the electrolysis unit Vb, as the electrolysis unit voltage difference value ΔV. Together with this, the degradation detection unit 120 finds the difference value between the first measured temperature of the electrolysis unit Ta and the second measured temperature of the electrolysis unit Tb as the electrolysis unit temperature difference value ΔT, and finds the value obtained by dividing the electrolysis unit temperature difference value ΔT by the time ts between the first time point t1 and the second time point t2, as the electrolysis unit temperature change rate HT (= ΔT/t).

As explained above, also in this modification example, the electrolysis unit voltage difference value ΔV and the electrolysis unit temperature change rate HT (= ΔT/t) can be found as values which quantitatively indicate the degradation state of the electrolysis unit 20.

### [F-2] Modification example 1-2

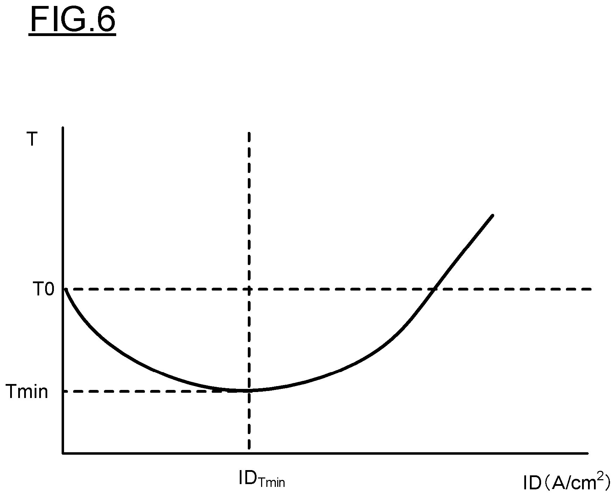

FIG. 6 is a chart for explaining Modification example 1-2. In FIG. 6, the horizontal axis indicates the current density ID (A/cm²) when the current is supplied to the electrolysis unit 20, and the vertical axis indicates the temperature T (°C) of the electrolysis unit 20.

As illustrated in FIG. 6, when the current density ID (A/cm²) is increased from zero, the temperature T (°C) of the electrolysis unit 20 decreases from an initial temperature value T0 to a minimum temperature value Tmin and then increases from the minimum temperature value Tmin. In a range where the temperature T (°C) of the electrolysis unit 20 decreases from the initial temperature value T0 to the minimum temperature value Tmin (ID is 0 to ID_{Tmin}), an endothermic reaction occurs in the electrolysis unit 20. In contrast to this, in a range where the temperature T (°C) of the electrolysis unit 20 increases from the minimum temperature value Tmin (a range where ID exceeds ID_{Tmin}), heat generation occurs in the electrolysis unit 20.

In the above embodiment, the currents to be supplied to the electrolysis unit 20 preferably have the first current value Ia and the second current value Ib which are current values at which heat generation occurs in the electrolysis unit 20 (see FIG. 3A). In other words, the current densities ID (A/cm²) at the first current value Ia and the second current value Ib preferably exceed the current density ID_{Tmin} at which the temperature T (°C) of the electrolysis unit 20 changes from decreasing to increasing. With this, the degradation state of the electrolysis unit 20 can be more appropriately grasped.

### [F-3] Other modification examples

The case where the degradation detection unit 120 executes the detection of the degradation of the electrolysis unit 20 based on the measured voltage of the electrolysis unit DV and the measured temperature of the electrolysis unit DT is explained in the above embodiment, but the present invention is not limited to this. The degradation detection unit 120 may be configured to execute the detection of the degradation of the electrolysis unit 20 based on the measured voltage of the electrolysis unit DV.

Note that the time ts between the first time point t1 and the second time point t2 is not particularly limited, but is preferably about 10 seconds to 30 seconds in the case of executing the detection of the degradation of the electrolysis unit 20 based on the measured voltage of the electrolysis unit DV. Further, in the case of executing the detection of the degradation of the electrolysis unit 20 based on the measured temperature of the electrolysis unit DT, the time ts between the first time point t1 and the second time point t2 is preferably 1 minute or more.

### <Second embodiment>

### [A] Configuration of a hydrogen production apparatus degradation detection system

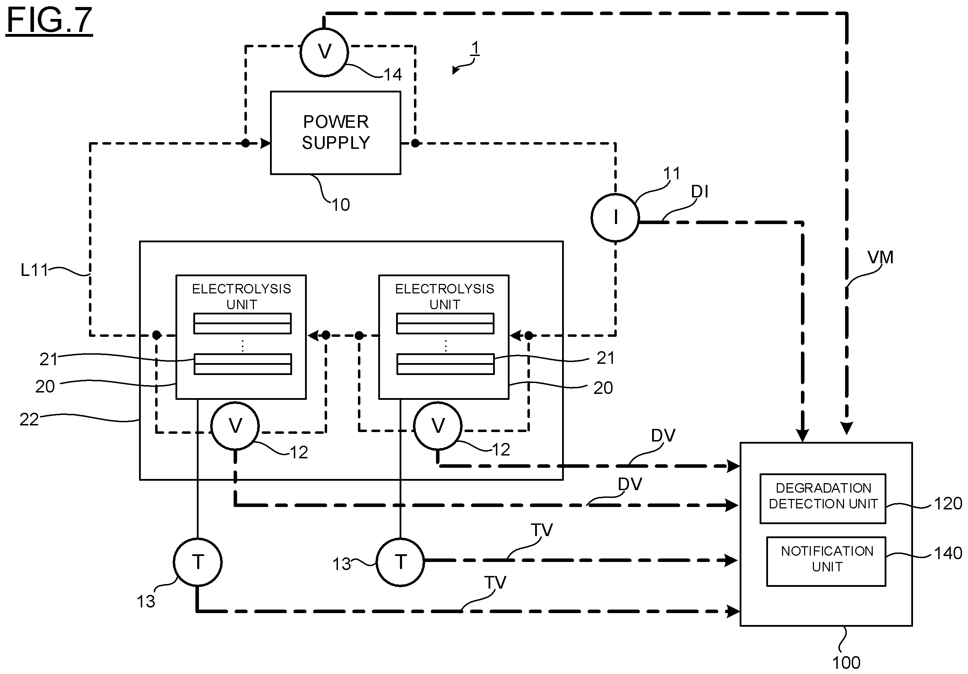

FIG. 7 is a schematic diagram illustrating a configuration of a hydrogen production apparatus degradation detection system 100 according to a second embodiment. FIG. 7 shows the relation between the hydrogen production apparatus degradation detection system 100 and a part of the hydrogen production apparatus 1 (see FIG. 1).

As illustrated in FIG. 7, in this embodiment, the hydrogen production apparatus 1 includes a plurality of electrolysis units 20. Into the hydrogen production apparatus degradation detection system 100 in this embodiment, the measured voltage of the electrolysis unit DV and the measured temperature of the electrolysis unit DT which are measured for each of the plurality of electrolysis units 20 are input as input signals. In addition, into the hydrogen production apparatus degradation detection system 100 in this embodiment, measured voltage of a power supply unit VM acquired by measuring the voltage of the power supply unit 10 by a voltmeter 14 when the power supply unit 10 is executing the power supply, is input as the input signal. Except for this point and related points, this embodiment is the same as the above embodiment. Therefore, the explanation of the overlapping matters is omitted as appropriate.

In the hydrogen production apparatus degradation detection system 100 in this embodiment, into the degradation detection unit 120, the measured voltage of the electrolysis unit DV and the measured temperature of the electrolysis unit DT which are measured for each of the plurality of electrolysis units 20 are input. Then, the degradation detection unit 120 executes the detection of the degradation of the plurality of electrolysis units 20 using the measured voltage of the electrolysis unit DV and the measured temperature of the electrolysis unit DT which are measured for each of the plurality of electrolysis units 20, as in the case of the above embodiment.

In this embodiment, measured voltage of the power supply unit VM measured for the voltage of the power supply unit 10 is input into the degradation detection unit 120, unlike the case of the above embodiment. The degradation detection unit 120 is configured to detect the degradation of a portion of the hydrogen production apparatus 1 other than the electrolysis unit 20, based on the voltage of the power supply unit voltage VM and the measured voltage of the electrolysis unit DV.

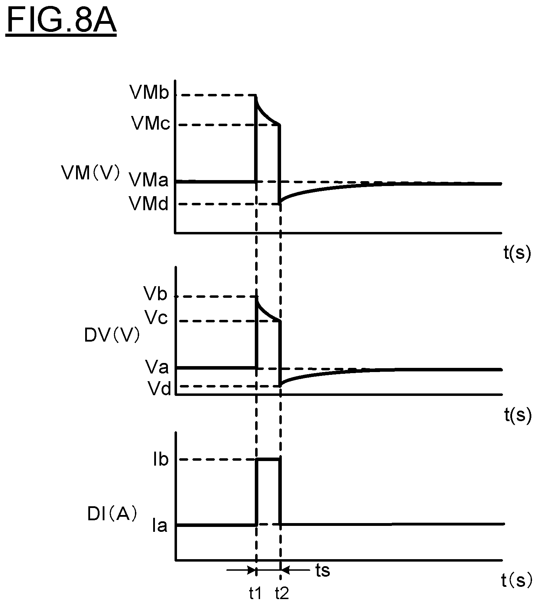

FIG. 8A is a chart illustrating the measured current DI, the measured voltage of the electrolysis unit DV, and measured voltage of the power supply unit VM which are input into the degradation detection unit 120 in the hydrogen production apparatus degradation detection system 100 according to the second embodiment. In FIG. 8A, the horizontal axis indicates the time t (s), and the vertical axes in graphs indicate the measured current DI (A), the measured voltage of the electrolysis unit DV (V), and measured voltage of the power supply unit VM (V), respectively.

When detecting the degradation of the hydrogen production apparatus 1 in this embodiment, the power supply unit 10 executes power supply to the electrolysis unit 20 through step input as illustrated in FIG. 7, as in the case of the first embodiment. Thus, the measured voltage of the electrolysis unit DV shifts as in the case of the first embodiment.

Measured voltage of the power supply unit VM is a first measured voltage of the power supply unit VMa when the current of the first current value Ia is supplied to the electrolysis unit 20 before the first time point t1. Then, when the current of the first current value Ia is switched to the current of the second current value Ib at the first time point t1, measured voltage of the power supply unit VM increases from the first measured voltage of the power supply unit VMa to a second measured voltage of the power supply unit VMb (maximum value). Then, during the interval (ts) between the first time point t1 and the second time point t2, measured voltage of the power supply unit VM decreases from the second measured voltage of the power supply unit VMb to a third measured voltage of the power supply unit VMc as the time t passes. Then, when the current of the second current value Ib is switched to the current of the first current value Ia at the second time point t2, measured voltage of the power supply unit VM decreases from the third measured voltage of the power supply unit VMc to a fourth measured voltage of the power supply unit VMd (minimum value). Then, after the second time point t2, measured voltage of the power supply unit VM increases from the fourth measured voltage of the power supply unit VMd to the first measured voltage of the power supply unit VMa as the time t passes (VMb > VMc > VMa > VMd).

As explained above, the degradation detection unit 120 detects the degradation based on measured voltage of the power supply unit VM and the measured voltage of the electrolysis unit DV.

Here, the degradation detection unit 120 acquires the third measured voltage of the power supply unit VMc of measured voltage of the power supply units VM. Further, the degradation detection unit 120 acquires the third measured voltage of the electrolysis unit Vc of the measured voltage of the electrolysis units DV. Then, the degradation detection unit 120 finds a difference value between the third measured voltage of the power supply unit VMc and the third measured voltage of the electrolysis unit Vc, as a power supply unit voltage difference value ΔVM, and detects the degradation according to the power supply unit voltage difference value ΔVM.

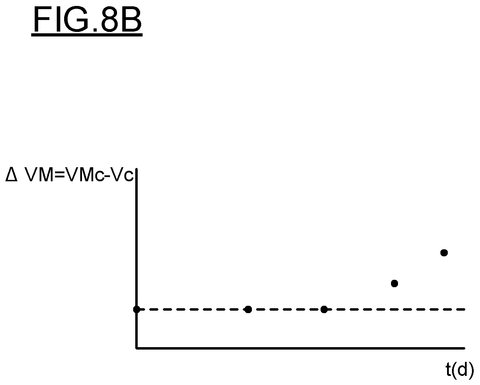

FIG. 8B is a chart illustrating the power supply unit voltage difference value ΔVM found by the degradation detection unit 120 in the hydrogen production apparatus degradation detection system 100 according to the second embodiment. In FIG. 8B, the horizontal axis indicates the time t (d), and the vertical axis in a graph indicates the power supply unit voltage difference value ΔVM.

The power supply unit voltage difference value ΔVM generally shifts at a constant value, but increases due to the degradation of the current supply line L11. For example, the power supply unit voltage difference value ΔVM fluctuates from the constant value as illustrated in FIG 8B when the resistance increases due to the degradation of the current supply line L11 itself or when the connection becomes insufficient because looseness occurs between the current supply line L11 and the other portion.

As explained above, in this embodiment, the degradation detection unit 120 finds the power supply unit voltage difference value ΔVM as a value which quantitatively indicates the degradation state of the current supply line L11.

### [B] Conclusion

As explained above, in this embodiment, the degradation detection unit 120 detects the degradation of a portion of the hydrogen production apparatus 1 other than the electrolysis unit 20, based on measured voltage of the power supply unit VM acquired by measuring the voltage of the power supply unit 10 when the power supply unit 10 is executing the power supply and the measured voltage of the electrolysis unit DV acquired by measuring the voltage of the electrolysis unit 20 when the power supply unit 10 is executing the electric power supply.

Therefore, according to the hydrogen production apparatus degradation detection system 100 in this embodiment, the degradation of the hydrogen production apparatus 1 can be easily detected.

### <Other>

While certain embodiments of the present invention have been described herein, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### EXPLANATION OF REFERENCE SIGNS

1...hydrogen production apparatus, 10...power supply unit, 11... ammeter, 12...voltmeter, 13...thermometer, 14...voltmeter, 20...electrolysis unit, 21...electrolysis cell, 22...electrolysis cell-stackss container, 40... water supply source, 41...hydrogen supply source, 50... steam generation unit, 60...heat exchanger, 70...separation unit, 80...diluent gas source, 100...hydrogen production apparatus degradation detection system, 120...degradation detection unit, 140...notification unit, DI...measured current, DT...measured temperature of the electrolysis unit, DV...measured voltage of the electrolysis unit, HT...electrolysis unit temperature change rate, Ia...first current value, Ib...second current value, ID...current density, L11...current supply line, L21a...pipe, L21b...pipe, L40...pipe, L41...pipe, L50...pipe, L60...pipe, L70a...pipe, L80...pipe, t1...first time point, t2...second time point, Ta...first measured temperature of the electrolysis unit, Tb...second measured temperature of the electrolysis unit, TH1...threshold value, TH2...threshold value, Tmin...minimum temperature value, ts...time, Va...first measured voltage of the electrolysis unit, Vb...second measured voltage of the electrolysis unit , Vc...third measured voltage of the electrolysis unit, Vd...fourth measured voltage of the electrolysis unit, VM...measured voltage of the power supply unit, VMa...first measured voltage of the power supply unit, VMb...second measured voltage of the power supply unit, VMc...third measured voltage of the power supply unit, VMd...fourth measured voltage of the power supply unit, VM...measured voltage of the power supply unit, ΔT...electrolysis unit temperature difference value, ΔV...electrolysis unit voltage difference value, ΔVM...power supply unit voltage difference value

## Claims

1. A hydrogen production apparatus degradation detection system for detecting degradation of a hydrogen production apparatus configured to execute electrolysis of water by supplying a current from a power supply unit to an electrolysis unit via a current supply line, the system comprising
a degradation detection unit configured to execute detection of degradation of the electrolysis unit based on an measured voltage of the electrolysis unit acquired by measuring a voltage of the electrolysis unit when the current is supplied from the power supply unit to the electrolysis unit, wherein:
the power supply unit executes electric power supply to supply a current of a second current value different from a first current value to the electrolysis unit at a first time point from a state of supplying the current of the first current value to the electrolysis unit, and then return to the state of supplying the current of the first current value to the electrolysis unit at a second time point; and
the degradation detection unit finds a difference value between a first measured voltage of the electrolysis unit acquired as the measured voltage of the electrolysis unit when the current of the first current value is supplied to the electrolysis unit before the first time point and a second measured voltage of the electrolysis unit acquired as the measured voltage of the electrolysis unit when the current of the first current value is switched to the current of the second current value at the first time point, as an electrolysis unit voltage difference value, and detects the degradation of the electrolysis unit according to the electrolysis unit voltage difference value.

2. The hydrogen production apparatus degradation detection system according to claim 1, wherein
the first current value and the second current value are current values at which heat is generated in the electrolysis unit.

3. The hydrogen production apparatus degradation detection system according to claim 1, further comprising
a notification unit configured to notify to replace of the electrolysis unit when the electrolysis unit voltage difference value exceeds a predetermined threshold value.

4. The hydrogen production apparatus degradation detection system according to claim 1, wherein
the degradation detection unit
is configured to execute the detection of the degradation of the electrolysis unit based on an measured temperature of the electrolysis unit acquired by measuring a temperature of the electrolysis unit when the current is supplied from the power supply unit to the electrolysis unit,
finds a difference value between a first measured temperature of the electrolysis unit acquired as the measured temperature of the electrolysis unit when the current of the first current value is supplied to the electrolysis unit before the first time point and a second measured temperature of the electrolysis unit acquired as the measured temperature of the electrolysis unit when the current of the second current value is switched to the current of the first current value at the second time point, as an electrolysis unit temperature difference value, and finds a value obtained by dividing the electrolysis unit temperature difference value by a time between the first time point and the second time point, as an electrolysis unit temperature change rate, and
detects the degradation of the electrolysis unit according to the electrolysis unit temperature change rate.

5. The hydrogen production apparatus degradation detection system according to claim 4, further comprising
a notification unit configured to notify to replace of the electrolysis unit when at least one of the electrolysis unit voltage difference value and the electrolysis unit temperature change rate exceeds a predetermined threshold value.

6. The hydrogen production apparatus degradation detection system according to claim 1, wherein
the degradation detection unit is configured to detect the degradation of the hydrogen production apparatus based on a measured voltage of the power supply unit acquired by measuring a voltage of the power supply unit when the power supply unit is executing the electric power supply and the measured voltage of the electrolysis unit acquired by measuring the voltage of the electrolysis unit when the power supply unit is executing the electric power supply.
